**Europäisches Patentamt**

**European Patent Office**

**Office européen des brevets**

(19)

(11) Numéro de publication: **0 390 650**
**A1**

## (12) DEMANDE DE BREVET EUROPEEN

(21) Numéro de dépôt: **90400786.1**

(22) Date de dépôt: **22.03.90**

(51) Int. Cl.⁵: **B64D 1/06**

(30) Priorité: **28.03.89 FR 8903984**

(43) Date de publication de la demande:
**03.10.90 Bulletin 90/40**

(84) Etats contractants désignés:
**DE GB**

(71) Demandeur: **AVIONS MARCEL**
**DASSAULT-BREGUET AVIATION**
**27, Rue du Professeur Victor Pauchet**
**F-92420 Vaucresson(FR)**

(72) Inventeur: **Lemacon, Jacques**
**7 Allée Sémiranis**
**F-33120 Arcachon(FR)**

(74) Mandataire: **Colas, Jean-Pierre et al**
**Cabinet de Boisse 37, avenue Franklin D.**
**Roosevelt**
**F-75008 Paris(FR)**

(54) **Dispositif de maintien d'une charge accrochée à un aéronef.**

(57) Dispositif pour maintenir une charge accrochée sur un aéronef immobilisée par rapport audit aéronef, comportant des organes d'appui, portés par l'aéronef et mobiles par rapport à l'aéronef, des moyens prévus pour déplacer les organes d'appui jusqu'au contact de ladite charge, et un vérin, distinct desdits moyens, et comportant un équipage mobile qui est apte à exercer sur les organes d'appui une force pour les serrer fortement contre la charge.

FIG.:2

## Dispositif de maintien d'une charge accrochée à un aéronef.

La présente invention concerne un dispositif de maintien d'une charge accrochée à un aéronef.

Les avions militaires, ou ceux utilisés à des fins militaires, emportent couramment des charges extérieures, le plus souvent des armes et, en particulier, des bombes.

Elles sont emportées sous le fuselage ou sous les voilures où elles sont accrochées à des éléments rapportés, appelés pylônes ou poutres.

Ces pylônes sont des structures rigides de forme allongée qui viennent, d'une part, se fixer à l'avion et qui, d'autre part, portent à leur partie inférieure des mécanismes plus ou moins complexes destinés à accrocher la ou les charges. Le plus souvent, ces charges, les bombes par exemple, possèdent à leur partie supérieure un ou deux anneaux pour assurer leur accrochage.

La liaison avec le pylône se fait de la manière suivant :
- sur le pylône se trouvent des crochets articulés qui reprennent les anneaux de la charge pour suspendre celle-ci au pylône,
- afin d'immobiliser la charge ainsi accrochée, celle-ci est fortement serrée sur des pièces d'appui, qui dépassent de part et d'autre du pylône, au voisinage des crochets.

En effet, durant l'évolution de l'avion en vol, il est impératif que la charge fasse corps avec le pylône et que les efforts qu'elle subit n'entraînent pas de déplacement relatif entre elle et le pylône. Il faut donc, au niveau des appuis, créer des contraintes suffisantes pour que la charge soit bien immobilisée.

Habituellement, l'accrochage de la charge se fait par une commande mécanique actionnée manuellement. Par contre, le mécanisme de largage en vol est actionné par des gaz sous-pression générés soit par la combustion d'une petite charge de poudre, soit par l'ouverture d'une réserve (bouteille de gaz comprimé, par exemple). Cette dernière solution a l'avantage de ne pas polluer les circuits dans lesquels circule le gaz, ce qui est très important pour l'utilisateur quant à l'entretien des circuits.

En ce qui concerne la mise en contrainte de la charge par les pièces prévues pour cet usage, elle peut se faire de différentes manières :
- déplacement du système d'accrochage, les appuis étant des pièces fixes,
- utilisation de vis traversant les pièces d'appui et venant s'appuyer sur la charge (appelées vis calantes),
- appuis mobiles mus par un mécanisme spécifique.

Dans ces différents cas, la manoeuvre se fait au moyen d'un mécanisme mis en mouvement manuellement par l'intermédiaire d'outils appropriés.

L'opération de mise en appui se fait en deux stades:
- on amène la charge en contact avec les appuis sans exercer d'effort appréciable au niveau de la zone d'appui,
- on exerce alors un effort dit "de précontrainte" en appliquant au mécanisme un couple d'une valeur donnée, ou en faisant décrire un nombre de tours déterminé aux pièces en rotation qui transmettent les couples.

Selon US-A-4.441.674 et US-A-4.168.046, on utilise pour réaliser la mise en contact avec les appuis et la mise en précontrainte un vérin dont l'équipage mobile est actionné par un fluide sous pression.

Cette disposition a pour inconvénient d'utiliser le même organe pour deux opérations différentes, la première exige une force faible et une capacité de déplacement importante, la seconde exige une force importante pour un déplacement réduit. Il en résulte un poids et un coût excessif.

L'invention a pour but de fournir un appareillage qui soit plus simple et plus léger, tout en offrant la même sécurité que les dispositifs antérieurs.

L'invention fournit un dispositif pour maintenir une charge accrochée sur un aéronef immobilisée par rapport audit aéronef, comportant des organes d'appui, portés par l'aéronef et mobiles par rapport à l'aéronef, des moyens prévus pour déplacer les organes d'appui jusqu'au contact de ladite charge, et un vérin, distinct desdits moyens, et comportant un équipage mobile qui est apte à exercer sur les organes d'appui une force pour les serrer fortement contre la charge.

Il est possible de différencier les moyens d'action entre les deux phases définies précédemment, en gardant une commande mécanique pour la première phase, l'énergie pneumatique n'étant utilisée que pour la deuxième.

Comme cette opération se fait exclusivement quand l'avion est au sol, on peut envisager d'utiliser une source pneumatique extérieure. Ceci a l'avantage de ne pas consommer une partie du gaz stocké dans la réserve en place dans le pylône et également de simplifier le système de distribution du gaz dans le pylône.

On a vu ci-dessus que la mise en appui nécessite de déplacer des ensembles de pièces. Ces déplacements se feront donc sous l'action de vérins. Le fluide injecté dans les vérins peut être soit directement le gaz sous pression (en réserve dans le pylône ou venant d'une source extérieure), soit un fluide intermédiaire (gaz ou liquide) qui serait lui-même mis en mouvement par la source pneumatique primaire.

Comme il n'est pas souhaitable de maintenir en permanence sous pression le ou les vérins pour garder la précontrainte, un système mécanique vient automatiquement bloquer les vérins dans la position en précontrainte, ce qui permet de faire chuter la pression interne du fluide introduit dans le vérin, tout en garantissant la précontrainte exercée, jusqu'au largage de la charge.

Quand on aura à remettre en place une charge, il faudra, dans certains cas, déverrouiller au préalable le système de blocage des vérins pour pouvoir répéter le cycle de mise en place précédemment décrit.

Cette opération peut être réalisée soit mécaniquement, soit pneumatiquement.

La description qui va suivre en regard du dessin annexé, donné à titre d'exemple non limitatif, fera bien comprendre comment l'invention peut être réalisée, les particularités qui ressortent tant du texte que du dessin faisant, bien entendu, partie de ladite invention.

La figure 1 est une coupe verticale axiale de la moitié d'un dispositif d'accrochage de charge perfectionné selon l'invention.

Les figures 2 et 3 représentent, en coupe transversale selon II-II, la position des organes avant et après la précontrainte par action pneumatique.

La figure 4 est une vue en projection horizontale.

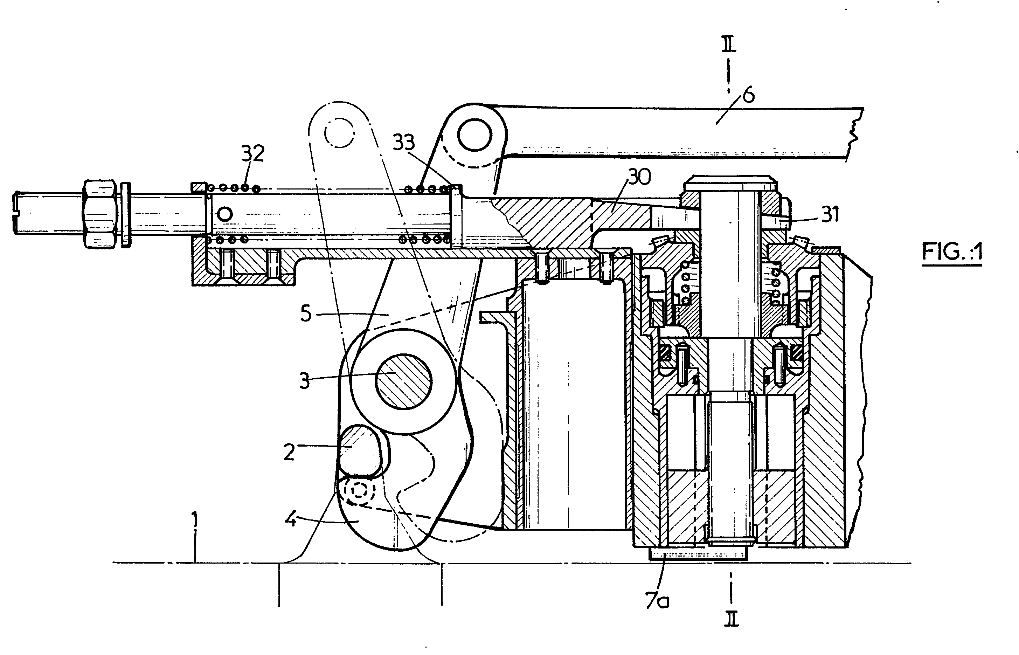

Sur la figure 1, la ligne en traits mixtes 1 représente une partie du contour apparent supérieur d'une charge telle qu'une bombe devant être accrochée sous l'avion. Cette charge, qui a la forme générale d'un solide de révolution, a son axe parallèle à la figure 1, mais un peu plus bas dans le plan de la figure.

A cette charge sont fixés de forts anneaux tels que 2 qui ont entre eux un intervalle égal à celui des axes tels que 3 perpendiculaires au plan de la figure 1, autour desquels peuvent pivoter des crochets tels que 4 identiques et orientés de la même manière.

La position de ces crochets représentée en trait plein est celle dans laquelle, engagés dans les anneaux 2, les crochets retiennent la charge qui est ainsi suspendue à l'avion.

La position des crochets représentés en traits mixtes est au contraire celle dans laquelle les crochets, dégagés des anneaux 2, libèrent la charge qui est ainsi larguée. Les crochets sont solidaires de leviers tels que 5 qui sont reliés entre eux par une bielle 6 synchronisant leur mouvement tant pour l'accrochage que pour le largage de la charge.

Pour éviter tout mouvement de la charge, au cours des évolutions de l'avion, la charge est bloquée par un effort dit "de précontrainte" au moyen du dispositif qui va maintenant être décrit.

Entre deux crochets successifs se trouve une paire de leviers 7 dont chacun peut pivoter autour d'un axe 8 parallèle à l'axe de la charge.

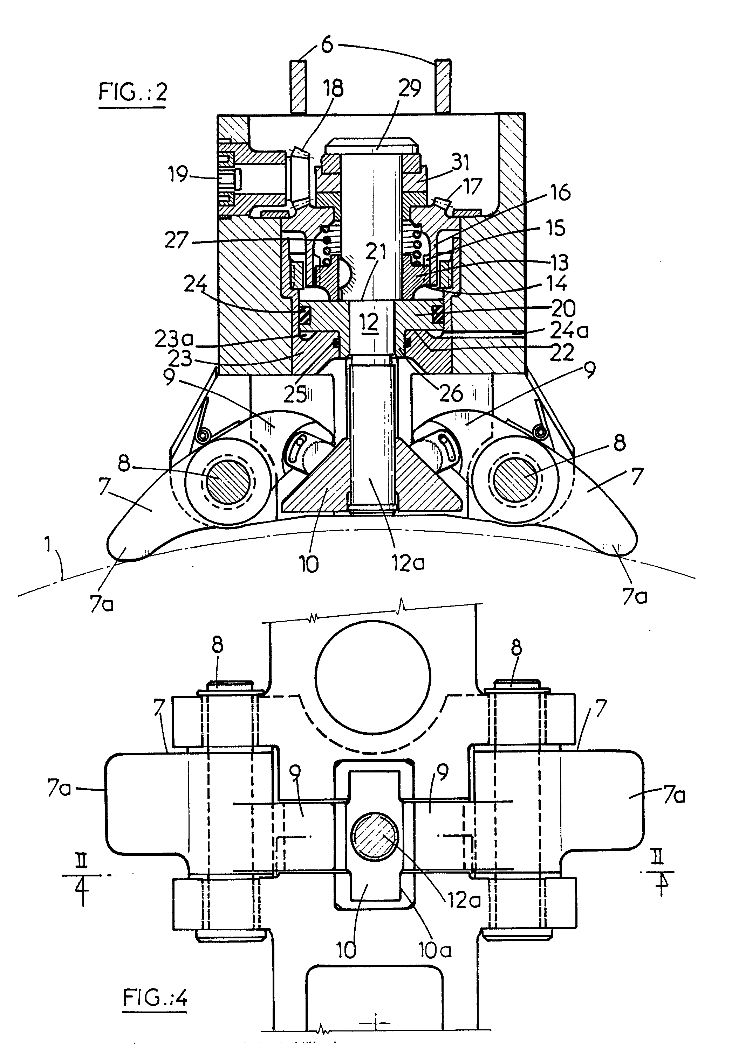

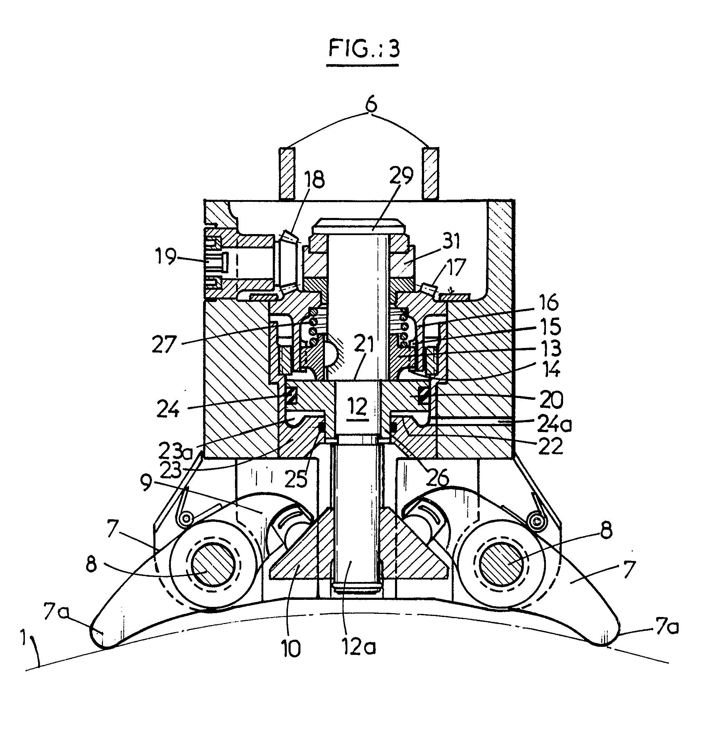

L'extrémité saillante 7a de chacun de ces leviers, destinée à venir s'appuyer à force sur la charge, a une forme cylindrique. Chacun des leviers comporte une queue 9 et entre les queues se trouve une pièce cunéiforme 10 dont les rampes 11 coopèrent avec les queues 9 de manière que lors du déplacement de la pièce 10 vers le haut des figures 2 ou 3, les queues 9, écartées l'une de l'autre par les rampes 11, viennent appuyer fortement les extrémités 7a des leviers 7 contre la charge. Les leviers tendent donc à repousser la charge, ce qui a pour effet d'appuyer fortement les anneaux 2 sur les becs des crochets 4, la charge se trouvant ainsi immobilisée. La force de précontrainte exercée sur la charge doit être assez grande pour prendre en compte les accélérations auxquelles la charge est soumise dans les évolutions de l'avion.

La pièce 10, de forme rectangulaire en plan (figure 4), est taraudée et ses filets coopèrent, comme le feraient ceux d'un écrou, avec l'extrémité filetée 12a d'une tige 12, La pièce 10 est de plus guidée dans un puits 10a à section rectangulaire du boîtier. La tige 12 est solidaire d'une petite roue dentée 13 dont les dents 14 sont en prise avec la denture intérieure 15 d'un manchon 16. Celui-ci comporte une denture conique 17 en prise avec un pignon conique 18 dont l'axe est muni d'un embout 19 auquel on peut accoupler un outil à main ou à moteur pour mettre en rotation le système constitué par le pignon 18, le manchon 16 avec ses dentures 17 et 15, la roue 13 et la tige 12. Dans une rotation de sens convenable de la tige 12, la pièce cunéiforme 10 est déplacée vers le haut des figures 2 et 3, de sorte qu'en poussant sur les queues 9, cette pièce 10 vient mettre les leviers 7 en appui sur la charge.

Pour réaliser un effort de précontrainte important, la tige 12 est associée à un piston 20 qui, au repos (position de la figure 2), se trouve serré entre un épaulement 21 de la tige 12 et un appui de repos 22, du boîtier 23 contenant le dispositif. Au-dessous du piston, se trouve un évidement annulaire 23a qui peut être alimenté en gaz sous pression par une canalisation 24a. A sa périphérie, le piston 20 porte un joint étanche 24 et un autre joint 25 est prévu entre le boîtier 23 et la collerette 26 qui forme la tige du piston.

Quand, après avoir mis les leviers 7 en appui sur la charge par le processus déjà décrit, on envoie du gaz sous pression en 23, le piston est soulevé ainsi que la tige 12 et la pièce 10 transmet aux leviers 7 une force d'appui sur la charge qui est fonction de la pression du gaz et de la surface du piston. Le mouvement vertical de la tige 12 se fait à l'encontre de la force d'un ressort de rappel 27.

On remarque qu'à son sommet la tige 12 porte un épaulement 29 sous lequel est engagé un verrou 30 dont l'extrémité 31 a la forme d'une fourche chevauchant la tige 12. Quand la tige est soulevée par l'action du piston 20, un ressort 32 qui pousse sur un épaulement 33 du verrou déplace celui-ci vers la droite de la figure 1 en bloquant ainsi la tige dans la position que lui a donnée le piston, ce qui permet de supprimer la pression du gaz comprimé sur ce piston, tout en maintenant le dispositif dans la position de précontrainte.

**Revendications**

1. Dispositif pour maintenir une charge accrochée à un aéronef dans lequel la charge est serrée fortement sur des organes d'appui (7) prévus sur l'aéronef, à l'aide d'un vérin dont l'équipage mobile (20) est actionné par un fluide sous pression, caractérisé en ce qu'il comporte des moyens (13, 14, 17, 18) distincts du vérin et destinés à mettre les organes d'appui (7) au contact de la charge, sans action du vérin, au cours d'une première phase de l'opération de serrage.

2. Dispositif selon la revendication 1, dans lequel les organes d'appui (7) sont constitués par des leviers articulés sur des pivots fixes par rapport à l'aéronef, caractérisé en ce que lesdits moyens pour mettre les organes d'appui en contact avec la charge comportent une pièce (10) cunéiforme portant des rampes qui coopèrent avec la queue (9) du levier (7), et est entraînée par une tige filetée (12) qui peut être mise en rotation à l'aide d'engrenages (13, 16, 18).

3. Dispositif selon la revendication 2, caractérisé en ce que l'équipage mobile du vérin de serrage est un piston (20) monté sur la tige (12).

4. Dispositif selon l'une des revendications précédentes, caractérisé par un verrou (30) coopérant avec la tige (12) du piston pour bloquer cette tige dans sa position de précontrainte.

5. Dispositif selon la revendication 4, caractérisé en ce que ledit verrou est constitué par une pièce (30) dont l'extrémité (31) en forme de fourche vient s'engager sous un épaulement (29) de la tige (12) lorsque ladite pièce (30) est poussée par un ressort (32).

FIG.:1

EP 0 390 650 A1

FIG.:2

FIG.:4

## FIG.: 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 376 026 (ALKAN) * En entier * & US-A-4 168 046 (HASQUENOPH),(Cat. D,A) --- | 1,3 | B 64 D 1/06 |
| D,A | US-A-4 441 674 (HOLTROP) * Figure 7; colonne 3, lignes 4-12 * --- | 1 | |
| A | EP-A-0 016 325 (MESSERSCHMITT-BÖLKOW-BLOHM) * En entier * ----- | 1 | |

**DOMAINES TECHNIQUES RECHERCHES (Int. Cl.5)**

B 64 D

**Le présent rapport a été établi pour toutes les revendications**

| Lieu de la recherche | Date d'achèvement de la recherche | Examinateur |
|---|---|---|
| LA HAYE | 20-06-1990 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P0402)